Europäisches Patentamt

European Patent Office

Office européen des brevets

(19)

(11) **EP 1 203 876 B1**

(12) **FASCICULE DE BREVET EUROPEEN**

(45) Date de publication et mention
de la délivrance du brevet:
**17.03.2004 Bulletin 2004/12**

(51) Int Cl.⁷: **F02D 41/02**, F02D 41/40,
F01N 3/023

(21) Numéro de dépôt: **01402652.0**

(22) Date de dépôt: **12.10.2001**

(54) **Système d'aide à la régénération d'un filtre à particules intégré dans une ligne d'échappement d'un moteur Diesel de véhicule automobile**

System für die Unterstützung der Regeneration eines Partikelfilters in einer selbstgezündeten Brennkraftmaschine

System for assisting the regeneration of a particle filter comprised in the exhaust pipe of a diesel vehicle engine

(84) Etats contractants désignés:
**AT BE CH CY DE DK ES FI FR GB GR IE IT LI LU MC NL PT SE TR**

(30) Priorité: **03.11.2000 FR 0014136**

(43) Date de publication de la demande:
**08.05.2002 Bulletin 2002/19**

(73) Titulaire: **Peugeot Citroen Automobiles SA**
**92200 Neuilly sur Seine (FR)**

(72) Inventeurs:
• **Klein, Hervé**
**92300 Levallois Perret (FR)**
• **Salvat, Olivier**
**75010 Paris (FR)**

(74) Mandataire:
**Habasque, Etienne Joel Jean-François et al**
**Cabinet Lavoix**
**2, Place d'Estienne d'Orves**
**75441 Paris Cédex 09 (FR)**

(56) Documents cités:
**EP-A- 0 859 132**      **WO-A-00/60228**
**DE-A- 19 827 636**      **US-A- 4 455 393**
**US-A- 5 050 376**

• **WINTERHAGEN J: "Der neue Peugeot 607" ATZ AUTOMOBILTECHNISCHE ZEITSCHRIFT,FRANCKH'SCHE VERLAGSHANDLUNG. STUTTGART,DE, vol. 2000, no. 5, mai 2000 (2000-05), pages 300-308, XP002172871 ISSN: 0001-2785**

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On connaît par exemple du document EP-A-0 859 132, un système conforme au préambule de la revendication 1.

Cependant, la gestion du fonctionnement du filtre et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant:

- des moyens d'acquisition d'informations relatives aux conditions d'utilisation du véhicule, et
- des moyens d'analyse de ces informations pour détecter un type de roulage du véhicule favorable au déroulement de la régénération afin de déclencher celle-ci, caractérisé en ce que les moyens d'analyse sont adaptés pour piloter le fonctionnement de moyens d'alimentation commune en carburant des cylindres du moteur afin de déclencher la phase de régénération du filtre à particules par combustion des particules piégées dans celui-ci, en enclenchant une phase d'injections multiples de carburant dans les cylindres du moteur pendant leur phase de détente, en ce que les moyens d'analyse sont adaptés pour identifier un type de roulage actuel du véhicule parmi des types de roulage en ville, sur route, en montage ou sur autoroute et en ce que les moyens d'analyse sont adaptés pour calculer un critère de roulage instantané du véhicule, selon la relation :

$$Cr \; inst = V(1 + k \; Pp)$$

Avec

Cr inst :     Critère de roulage instantané
V :              Vitesse du véhicule
Pp :            Position de la pédale d'accélérateur
K :              Facteur de correction,

pour lisser ce critère de roulage instantané et pour le comparer à des seuils prédéterminés correspondant aux différents types de roulage afin de déterminer le type de roulage actuel.

L'invention sera mieux comprise à la lecture de la description qui va suivre, donnée uniquement à titre d'exemple et faite en se référant aux dessins annexés, sur lesquels :

- la Fig.1 représente un schéma synoptique illustrant un moteur Diesel de véhicule automobile, et les différents organes associés à celui-ci, et
- la Fig.2 illustre la détection d'un type de roulage.

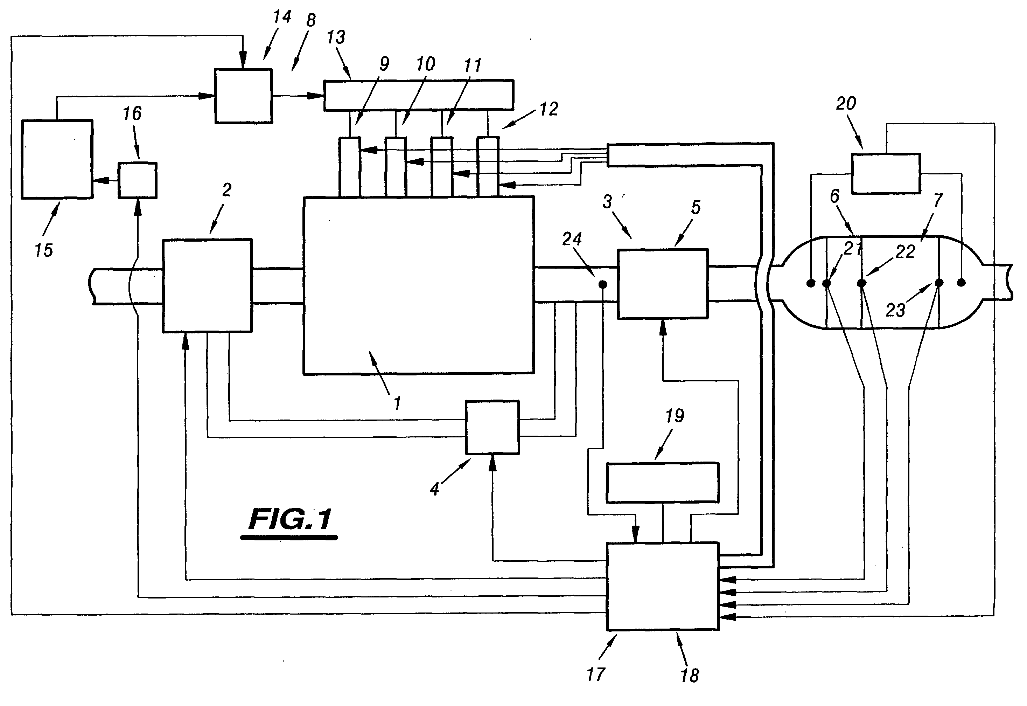

On a en effet représenté sur la figure 1, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, disposé dans la ligne d'échappement.

Le moteur est également associé à un système d'alimentation par exemple commune en carburant des cylindres de celui-ci. Ce système est désigné par la référence générale 8 sur cette figure et comporte par exemple des injecteurs à haute pression à commande électrique associés à ces cylindres.

Bien entendu, d'autres systèmes d'alimentation à haute pression comme par exemple par injecteurs-pompes peuvent être envisagés.

Dans l'exemple de réalisation représenté, le moteur est un moteur à quatre cylindres et comporte donc quatre injecteurs à commande électrique, respectivement 9,10,11 et 12.

Ces différents injecteurs sont associés par exemple à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et par exemple à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15 pour permettre l'injection d'une certaine quantité de cet additif dans le carburant.

D'autres moyens pour abaisser cette température peuvent également être utilisés comme par exemple un filtre à particules catalysé.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour contrôler le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le capteur de pression 20 peut également être relié aux bornes du filtre seul.

Le calculateur peut également recevoir une information de teneur en oxygène des gaz d'échappement à partir d'une sonde Lambda λ désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Les moyens de contrôle 17 sont également associés à des moyens de détermination de l'état d'activation du catalyseur d'oxydation 6 formés par le calculateur 18 de ceux-ci, pour, lors de la régénération du filtre, adapter de façon continue les conditions de déroulement de la phase d'injections multiples de carburant dans les cylindres du moteur afin de tenir compte de l'état d'activation du catalyseur.

Ceci est réalisé en commandant le phasage et/ou la quantité de carburant injecté lors des injections multiples pour adapter de façon continue la quantité d'hydrocarbures produite lors de cette phase par le moteur, au niveau d'activité du catalyseur et optimiser le fonctionnement de celui-ci, par pilotage du système d'alimentation en carburant 8.

Une surveillance en continu du niveau d'activité du catalyseur permet donc de commander en continu le phasage et/ou la quantité de carburant injecté pour optimiser en continu le fonctionnement du catalyseur et donc la température au sein de ce catalyseur en évitant toute dégradation de celui-ci, du filtre à particules ou encore du moteur et toute production de fumées ou d'odeurs.

L'état d'activation du catalyseur 6 peut être déterminé par le calculateur 18 par exemple à partir des informations délivrées par les capteurs de température 21 en entrée du catalyseur et 22 en sortie de celui-ci, de façon classique.

De préférence, le calculateur 18 est associé à une modélisation numérique intégrée du catalyseur pour connaître son état d'activité à partir des informations fournies par les capteurs.

Bien entendu, d'autres moyens peuvent être utilisés comme par exemple des moyens d'analyse de la composition chimique des gaz d'échappement en entrée et en sortie de ce catalyseur.

Comme cela a été indiqué précédemment, le calculateur 18 est associé à des capteurs permettant de relever des informations relatives aux conditions d'utilisation du véhicule comme par exemple sa vitesse, la position de la pédale d'accélérateur, le régime de rotation du moteur, etc...

Ce calculateur 18 est alors adapté pour analyser ces informations afin de détecter un type de roulage du véhicule favorable au déroulement de la régénération afin de déclencher celle-ci.

On sait en effet que l'augmentation de la température des gaz d'échappement et la température atteinte naturellement par ceux-ci sont plus importantes si le moteur du véhicule est utilisé sur un point de fonctionnement chargé.

Le calculateur est alors adapté pour détecter un tel type de roulage favorable, comme par exemple sur autoroute.

Ce calculateur 18 est en effet adapté pour identifier un type de roulage actuel du véhicule parmi des types de roulage en ville, sur route, en montage ou sur autoroute, en calculant un critère de roulage instantané du véhicule selon la relation :

$$Cr \; inst = V(1 + k \; Pp)$$

Avec

| | |
|---|---|
| Cr inst : | Critère de roulage instantané |
| V : | Vitesse du véhicule |
| Pp : | Position de la pédale d'accélérateur |
| K : | Facteur de correction. |

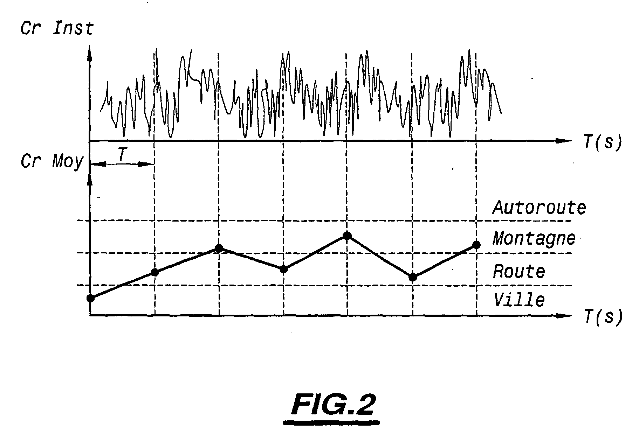

Ce critère de roulage instantané est alors lissé et comparé par le calculateur à des seuils prédéterminés correspondant aux différents types de roulage afin de déterminer le type de roulage actuel, comme cela est illustré sur la figure 2.

En fonction du type de roulage actuel détecté, la régénération du filtre à particules est déclenchée ou non par le calculateur selon que celui-ci est favorable ou non à cette régénération.

Ainsi, si le véhicule roule sur autoroute, on sait que les conditions seront optimales pour la régénération du filtre dans la mesure où le moteur est chargé.

Ceci permet d'améliorer le taux de réussite de la régénération et de diminuer la surconsommation induite par exemple par la post-injection.

Le critère de roulage instantané peut par exemple être obtenu par filtrage ou calcul d'une moyenne glissante sur une période de temps T.

**Revendications**

1. Système d'aide à la régénération d'un filtre à particules intégré dans une ligne d'échappement d'un moteur Diesel de véhicule automobile, comportant:

   - des moyens (18) d'acquisition d'informations relatives aux conditions d'utilisation du véhicule, et
   - des moyens (18) d'analyse de ces informations pour détecter un type de roulage du véhicule favorable au déroulement de la régénération afin de déclencher celle-ci, **caractérisé en ce que** les moyens d'analyse (18) sont adaptés pour piloter le fonctionnement de moyens (14) d'alimentation commune en carburant des cylindres du moteur afin de déclencher la phase de régénération du filtre à particules par combustion des particules piégées dans celui-ci, en enclenchant une phase d'injections multiples de carburant dans les cylindres du moteur pendant leur phase de détente, **en ce que** les moyens d'analyse (18) sont adaptés pour identifier un type de roulage actuel du véhicule parmi des types de roulage en ville, sur route, en montagne ou sur autoroute et **en ce que** les moyens d'analyse (18) sont adaptés pour calculer un critère de roulage instantané du véhicule, selon la relation :

$$Cr \; inst = V(1 + k \; Pp)$$

Avec

| | |
|---|---|
| Cr inst : | Critère de roulage instantané |
| V : | Vitesse du véhicule |
| Pp : | Position de la pédale d'accélérateur |
| K : | Facteur de correction, |

pour lisser ce critère de roulage instantané et pour le comparer à des seuils prédéterminés correspondant aux différents types de roulage afin de déterminer le type de roulage actuel.

2. Système selon la revendication 1, **caractérisé en ce que** le moteur est associé à différents organes parmi lesquels des moyens (2) d'admission d'air dans le moteur, des moyens (3) de recyclage de gaz d'échappement du moteur en entrée de celui-ci, un turbocompresseur (5), un catalyseur d'oxydation (6) disposé en amont du filtre à particules (7) dans la ligne d'échappement, et des moyens (16) pour abaisser la température de combustion des particules piégés dans celui-ci.

3. Système selon l'une quelconque des revendications précédentes, **caractérisé en ce que** les moyens d'alimentation commune comprennent un système d'alimentation à rampe commune à haute pression d'alimentation des cylindres du moteur.

4. Système selon la revendication 1 ou 2, **caractérisé en ce que** les moyens d'alimentation commune comprennent des injecteurs-pompes.

5. Système selon l'une quelconque des revendications 2, 3 ou 4, **caractérisé en ce que** les moyens pour abaisser la température de combustion des particules comprennent des moyens (16) d'ajout au carburant d'un additif destiné à se déposer sur le filtre à particules.

6. Système selon l'une quelconque des revendications 2, 3 ou 4, **caractérisé en ce que** le filtre à particules est un filtre catalysé.

**Claims**

1. A system for assisting the regeneration of a particle filter integrated in an exhaust line of a motor vehicle diesel engine, comprising:

   - means (18) for acquiring information relating to the conditions of use of the vehicle, and

- means (18) for analysing this information in order to detect a pattern of vehicle driving favourable to the course of the regeneration process for the purpose of initiating the said process, **characterised in that** the analysing means (18) are suitable for controlling the operation of means (14) for a common fuel feed to the engine cylinders for the purpose of initiating the regeneration phase of the particle filter by combustion of the particles trapped in the said filter, a phase of multiple injections of fuel into the engine cylinders being actuated during their expansion phase, **in that** the analysing means (18) are suitable for identifying a current pattern of vehicle driving from amongst urban, highway, mountain or motorway driving patterns, and **in that** the analysing means (18) are suitable for calculating an instantaneous driving criterion of the vehicle according to the relationship:

$$Cr\ inst = V(1 + k\ Pp)$$

wherein

Cr inst:  instantaneous driving criterion
V:  vehicle speed
Pp:  accelerator pedal position
K:  correction factor,

for the purpose of smoothing this instantaneous driving criterion and comparing it to predetermined thresholds corresponding to the different driving patterns in order to determine the current driving pattern.

2.  A system according to claim 1, **characterised in that** the engine is connected to various components, including means (2) for the intake of air into the engine, means (3 [sic - 4]) for recycling engine exhaust gas into the engine intake, a turbocharger (5), an oxidation catalyst (6) arranged upstream of the particle filter (7) in the exhaust line, and means (16) for reducing the combustion temperature of the particles trapped in the said filter.

3.  A system according to any one of the preceding claims, **characterised in that** the common feed means include a high pressure common fuel pipe feed system for feeding the engine cylinders.

4.  A system according to claim 1 or 2, **characterised in that** the common feed means include fuel injector pumps.

5.  A system according to any one of claims 2, 3 or 4, **characterised in that** the means for reducing the combustion temperature of the particles include means (16) for adding to the fuel an additive intended to be deposited on the particle filter.

6.  A system according to any one of claims 2, 3 or 4, **characterised in that** the particle filter is a catalysed filter.


**Patentansprüche**

1.  System für die Unterstützung der Regeneration eines Partikelfilters in einer Abgasanlage eines Dieselmotors eines Kraftfahrzeugs, bestehend aus:

    - Einrichtungen (18) zur Erfassung von Daten des Betriebszustandes des Fahrzeugs, und
    - Einrichtungen (18) zur Analyse dieser Daten zur Ermittlung eines für den Ablauf der Regeneration günstigen Fahrbetriebszustands des Fahrzeugs, um diese auszulösen, **dadurch gekennzeichnet, dass** die Einrichtungen (18) zur Analyse für die Steuerung der Funktion der gemeinsamen Kraftstoffversorgungsanlage (14) der Zylinder des Motors ausgebildet sind, um die Regenerationsphase des Partikelfilters durch Verbrennung der in ihm abgeschiedenen Partikel einzuleiten, indem eine Phase von mehrfachen Kraftstoffeinspritzungen in die Zylinder des Motors während ihres Arbeitstaktes ausgelöst wird,

    und dass die Einrichtungen (18) zur Analyse ausgebildet sind, einen aktuellen Fahrbetriebszustands des Fahrzeugs unter den Betriebszuständen im Stadtverkehr, auf der Landstraße, im Gebirge oder auf der Autobahn zu identifizieren,
    und dass die Einrichtungen (18) zur Analyse ausgebildet sind, ein Kriterium des momentanen Fahrbetriebszustands des Fahrzeugs nach folgender Beziehung zu berechnen:

$$Cr\ inst = V\ (1 + k\ Pp)$$

    Mit

Cr inst :  Kriterium des momentanen Fahrbetriebszustands
V :  Fahrzeuggeschwindigkeit
Pp :  Position des Gaspedals
K :  Korrekturfaktor,

dieses Kriteriums des momentanen Fahrbetriebszustands zu glätten und dasselbe mit vorbestimmten Schwellwerten zu vergleichen, welche unterschiedlichen Fahrbetriebszuständen entsprechen, um den momentanen Fahrbetriebszustand zu ermitteln.

2. System nach Anspruch 1, **dadurch gekennzeichnet, dass** der Motor mit unterschiedlichen Einrichtungen verbunden ist, unter denen sich Einrichtungen (2) für die Luftzufuhr in den Motor, Einrichtungen (3) für die Abgasrückführung des Motors in seihen Einlass, ein Turboverdichter (5), ein Oxidationskatalysator (6), der in der Abgasanlage in Strömungsrichtung vor dem Partikelfilter (7) angeordnet ist, und Einrichtungen (16) zum Absenken der Verbrennungstemperatur der in diesem abgeschiedenen Partikel befinden.

3. System nach einem der vorgehenden Ansprüche, **dadurch gekennzeichnet, dass** die gemeinsame Kraftstoffversorgungsanlage ein Versorgungssystem mit gemeinsamer Hochdruckversorgungsleitung der Zylinder des Motors aufweist.

4. System nach Anspruch 1 oder 2, **dadurch gekennzeichnet, dass** die gemeinsame Kraftstoffversorgungsanlage Einspritzpumpen aufweist.

5. System nach einem der Ansprüche 2, 3 oder 4, **dadurch gekennzeichnet, dass** die Einrichtungen zum Absenken der Verbrennungstemperatur der Partikel Einrichtungen (16) aufweisen, welche dem Kraftstoff einen Zusatz beifügen, der dazu bestimmt ist, sich im Partikelfilter abzulagern.

6. System nach einem der Ansprüche 2, 3 oder 4, **dadurch gekennzeichnet, dass** der Partikelfilter ein Katalysefilter ist.

**FIG.1**

**FIG.2**